**Europäisches Patentamt**

**European Patent Office**

**Office européen des brevets**

(19)

(11) Veröffentlichungsnummer : **0 110 065**
**B1**

(12) # EUROPÄISCHE PATENTSCHRIFT

(45) Veröffentlichungstag der Patentschrift :
28.05.86

(21) Anmeldenummer : 83110049.0

(22) Anmeldetag : 07.10.83

(51) Int. Cl.⁴ : **F 16 D   3/50, F 16 D   13/68**

(54) **Drehelastische Kupplung.**

(30) Priorität : **25.11.82 DE 3243644**

(43) Veröffentlichungstag der Anmeldung :
**13.06.84 Patentblatt 84/24**

(45) Bekanntmachung des Hinweises auf die Patenterteilung : **28.05.86 Patentblatt 86/22**

(84) Benannte Vertragsstaaten :
**AT BE CH DE FR GB IT LI NL SE**

(56) Entgegenhaltungen :
**EP-A- 0 090 075**
**GB-A- 2 097 099**
**US-A- 1 416 341**
**US-A- 2 017 591**
**US-A- 4 252 226**
**US-A- 4 252 227**
**US-A- 4 296 854**
**US-A- 4 300 363**

(73) Patentinhaber : **WOCO Franz-Josef Wolf & Co.**
**Sprudelallee 19**
**D-6483 Bad Soden-Salmünster (DE)**

(72) Erfinder : **Wolf, Franz Josef**
**Sprudelallee 19**
**D-6483 Bad Soden-Salmünster (DE)**
Erfinder : **Pietsch, Hubert**
**Am Quellenrain 13**
**D-6483 Bad Soden-Salmünster (DE)**

(74) Vertreter : **Jaeger, Klaus, Dr. et al**
**JAEGER & PARTNER Patentanwälte .Bergstrasse 48**
**1/2**
**D-8035 München-Gauting (DE)**

**Beschreibung**

Die Erfindung betrifft eine drehelastische Kupplung mit mindestens einem bewegungsumsetzenden Zwischenglied, das eine Rotation in eine Translation umsetzt und das rotatorisch kraftschlüssig mit einer ersten der beiden Kupplungshälften verbunden ist und zumindest im wesentlichen translatorisch kraftschlüssig mit mindestens einem Federglied verbunden ist, das seinerseits drehfest mit der zweiten der beiden Kupplungshälften verbunden ist.

Kupplungen dieser Art dienen der drehelastischen Übertragung von Drehmomenten zwischen zwei insbesondere koaxialen Wellen.

Eine eingangs genannte drehelastische Kupplung ist aus der US-A-2 017 591 bekannt. Bei dieser bekannten Kupplung besteht die erste Kupplungshälfte aus einer mit einem Ringflansch versehenen Nabe. Der Außenrand des Ringflansches weist in regelmäßigen Abständen radial ausgerichtete V-förmige Aussparungen auf. In jeder V-förmigen Aussparung ist ein Teil des bewegungsumsetzenden Zwischengliedes, nämlich eine Walze achsparallel zur Nabe teilweise über den Flanschrand überstehend eingesetzt. Der zweite Teil des bewegungsumsetzenden Zwischengliedes besteht aus einem Mitnehmer in Form eines Flachkolbens, der in einem radialen Schlitz der zweiten Kupplungshälfte gleitend geführt ist. Das innenliegende Ende des Mitnehmers ist als Lagerschale ausgebildet, welche den vom Flansch überstehenden Teil der Walze zumindest weitgehend umgreift. Am äußeren Ende des Mitnehmers greift das drehfest mit der zweiten Kupplungshälfte verbundene Federglied unter Vorspannung derart an, daß das zweiteilige bewegungsumsetzende Zwischenglied nach radial innen gegen die V-förmige Aussparung des Nabenflansches gepresst wird. Das bewegungsumsetzende Zwischenglied wandert aufgrund seiner Zwangsführung in dem Radialschlitz nach radial außen gegen das Federglied, sobald die beiden Kupplungshälften relativ zueinander verdreht werden. Von Nachteil bei dieser bekannten Kupplung ist es, daß ein relativ großer Anteil der Drehkraft von der einen Kupplungshälfte über das bewegungsumsetzende Zwischenglied auf die andere Kupplungshälfte quer zur radialen Auslenkung des Zwischengliedes ungedämpft übertragen wird. Damit verbunden ist auch ein frühzeitiger Verschleiß der Kupplung im Bereich des Führungsschlitzes und der V-förmigen Ausnehmung.

Eine weitere Kupplung der eingangs genannten Art ist aus der GB-A-2 097 099 bekannt. Zur Bewegungsumsetzung dienen bei dieser bekannten Kupplung paarweise zusammengelenkte Kniehebel, die von einer zentralen Nockenscheibe beaufschlagt sind und die unter Vorspannung stehenden Federglieder bei einer Relativdrehung der Kupplungshälften gegeneinander zusätzlich komprimieren. Nachteilig ist der komplizierte Aufbau dieser Kupplung, wobei die verwendete Bewegungsumsetzung nicht gewährleistet, daß restliche rotatorische Komponenten an die Federglieder übertragen werden, die zu einer Scherkraftbeanspruchung der Federglieder führen.

Eine Kupplung der eingangs genannten Art ist auch aus den amerikanischen Patentschriften US-A-4 252 226, US-A-4 252 227, US-A-4 296 854 und US-A-4 300 363 bekannt. Als bewegungsumsetzendes Zwischenglied dient entweder ein Kurbeltrieb (US-A-4 252 226) oder ein Kurventrieb. Das Federglied ist in allen Fällen ein Band oder eine Lasche aus einem Elastomer, das auf Zug beansprucht wird.

Nachteil dieser Bauart einer drehelastischen Kupplung ist die bekannte rasche Ermüdung und Alterung eines auf Zug beanspruchten Elastomers, insbesondere unter zyklischer Beanspruchung. Außerdem führt ein Reißen ·der Elastomerfederglieder zum vollständigen Ausfall der Kupplung.

Der Erfindung liegt daher die Aufgabe zugrunde, eine drehelastische Kupplung mit einem bewegungsumsetzenden Zwischenglied und mit einem federnden Zwischenglied dahingehend zu verbessern, daß durch eine geringere Materialbeanspruchung eine längere Standzeit und eine größere Zuverlässigkeit der Kupplung erzielt werden.

Gelöst wird diese Aufgabe gemäß der Erfindung dadurch, daß als bewegungsumsetzendes Zwischenglied eine Exzenterscheibe verwendet wird, an der ein mit dem Federglied kraftschlüssig verbundenes Federglied der Koppelglied drehbar angelenkt ist. ·

Durch die Zwischenschaltung des Koppelgliedes werden die restlichen rotatorischen Komponenten im translationsseitigen Ausgang der Exzenterscheibe ausgeschaltet ohne die Nachteile der Zwangsführung des· bewegungsumsetzenden Zwischengliedes nach dem Stand der Technik in Kauf nehmen zu müssen, kann also mit anderen Worten verhindert werden, daß das gummielastische federnde Zwischenglied zusätzlich zu der beabsichtigten translatorischen Beaufschlagung mit einer Scherkraft beaufschlagt wird, die im Hinblick auf eine Ermüdung und Alterung von gummielastischem Werkstoff zur ungünstigsten Art der Beanspruchung einer gummielastischen Feder überhaupt zählt. Durch solche Scherkraftbeanspruchung gummielastischer Federglieder werden zusätzlich Unwuchten in die Kupplung eingeführt, die nicht nur die Betriebskenndaten der Kupplung, vor allem bei höheren Drehzahlen, ungünstig beeinflussen, sondern weiterhin die Standzeit der Kupplung verkürzen. Diese Einflüsse können durch die Zwischenschaltung des Koppelgliedes zwischen die Exzenterscheibe und das Federglied gemäß der Erfindung ausgeschaltet werden.

Durch die Zwischenschaltung des Koppelgliedes kann der Angriffspunkt der von der Exzenterscheibe auf das federnde Zwischenglied übertragenen Kraft bzw. Arbeit (Drehmoment) in den Wirkflächenmittelpunkt des federnden Zwischengliedes gelegt und durch Fehlen der Scherkomponenten auch während des Betriebes dort gehalten werden.

Nach einer Ausgestaltung der Erfindung ist das Koppelglied vorzugsweise eine starre Verbindung, insbesondere ein Pleuel, dessen eines Auge die Exzenterscheibe drehbar, vorzugsweise unter Zwischenschaltung von Lagerrollkörpern, außen umgreift und dessen anderes Auge drehbar oder schwenkbar am Federglied gelagert ist.

Ein wesentlicher Vorteil des zwischengeschalteten Koppelgliedes liegt darin, daß nach einer Ausgestaltung der Erfindung vorzugsweise die Exzenterscheibe und das Koppelglied so miteinander verbunden sind, daß das Federglied bei einer Relativverdrehung der beiden Kupplungshälften gegeneinander mit einer Kompressionskraft beaufschlagt wird, daß also das Federglied weder einer Zugbeanspruchung noch mit einer Scherkraft, zumindest einer ins Gewicht fallenden Scherkraftkomponente beaufschlagt wird. Dabei macht sich die schonende Beanspruchung des Federelementes unter Druck nicht nur bei den Elastomerfedern günstig bemerkbar, sondern auch bei der äquivalenten Verwendung von Metallfedern, die bei praktisch jeder Ausgestaltung unter Druckbelastung widerstandsfähiger sind und eine längere Haltbarkeit aufweisen als unter Zugbelastung und/oder Scherkraftbelastung.

Die drehelastische Kupplung gemäß der Erfindung wird vorzugsweise insbesondere im Kraftfahrzeugbau verwendet und zwar dort vor allem im Antriebsstrang, insbesondere zwischen der Mitnehmerscheibe und der Abtriebwelle einer Trennkupplung oder eines automatischen Getriebes, sowie als Tilger, insbesondere Niederfrequenztilger.

Ein wesentlicher Vorteil aller Ausführungen der Kupplung gemäß der Erfindung besteht weiterhin darin, daß drehelastische Verdrehwinkel von bis zu ± 180°, bezogen auf eine Null-Lage der beiden Kupplungshälften gegeneinander, erreichbar sind.

Der radial auf die Wirkflächenmitte des Federgliedes ausgeübten Kraft bei einer Drehmomentübertragung von der ersten Kupplungshälfte auf die zweite Kupplungshälfte wirkt die Federkraft des Federgliedes solange zunehmend entgegen, bis das Lastdrehmoment an der ausgangsseitigen zweiten Kupplungshälfte und das Antriebsdrehmoment an der beaufschlagten eingangsseitigen Kupplungshälfte im Drehmomentengleichgewicht stehen. Wie groß im Augenblick dieses Drehmomentengleichgewichtes der Verdrehwinkel ist, also der Winkel, um den die beiden Kupplungshälften relativ gegeneinander verdreht sind, hängt von der Abstimmung der Kupplung ab, also beispielsweise von der Abstimmung der Exzentrizität der Exzenterscheibe und der Federkennlinie des eingesetzten Federgliedes. Je weicher beispielsweise bei vorgegebener Exzentrizität der Exzenterscheibe die Federkennlinie des Federgliedes ist, desto größer wird der Verdrehwinkel sein, der sich bei einem bestimmten Drehmoment im Drehmomentengleichgewicht einstellt. Je größer wiederum dieser Verdrehwinkel im Bereich des Drehmomentengleichgewichtes ist, desto weicher stellt sich das Drehmomentenübertragungsverhalten der Kupplung in der Drehmoment-Verdrehwinkel-Kennlinie, also der Federkennlinie der drehelastischen Kupplung, dar.

Für normalen Betrieb werden die Exzentergeometrie und die Federkenndaten der Federglieder zweckmäßigerweise so ausgelegt, daß sich bei dem unter normalen Betriebsbedingungen zu erwartenden maximalen Drehmoment, mit dem die Kupplung beaufschlagt wird, ein Verdrehwinkel im Bereich von ungefähr 60° bis 100° einstellt. Der von dem solcherart abgestimmten und eingestellten Verdrehwinkel bis zum maximal möglichen Verdrehwinkel von 180° verbleibende Winkelbetrag von rund 80° bis 120° dient dabei der anschlagfreien weichen Überlastungssicherung.

So kann beispielsweise eine Kupplung, die auf einen Verdrehwinkel von 90° bei im Normalbetrieb maximalem Drehmoment ausgelegt ist ohne weiteres mit schlagartig auftretenden wesentlich größeren Drehmomenten als dem im Normalbetrieb maximal zu erwartenden Drehmoment beaufschlagt werden, ohne daß dies in der abgetriebenen Welle zu Schlägen, Stößen oder zum Reißen führt, da solche Drehmomentstöße von der drehelastischen Kupplung mit weicher Progression der Kennlinie, aber anschlagfrei bis zu einem Verdrehwinkel von 180°, also dem doppelten Betrag des in dem hier angenommenen Beispiel vorgesehenen normalen maximalen Verdrehwinkels von 90°, aufgenommen werden können. Beim Einleiten von Drehmomenten in die Kupplung, die selbst diesen Sicherheitsbereich überschreiten, tritt dann lediglich ein « Durchrutschen » der Kupplung auf. Bei der Verdrehung der beiden Kupplungshälften gegeneinander um Winkel von größer als 180° tritt eine zunehmende Entlastung des oder der Federglieder ein, und zwar so lange, bis nach Vollendung einer Relativverdrehung der beiden Kupplungshälften gegeneinander von 360°, bezogen auf die entlastete Nullstellung der Kupplung, diese Nullstellung wieder erreicht ist und wiederum die zunehmende radiale Beaufschlagung des oder der Federglieder eintritt, durch die der Normalbetrieb der Kupplung gekennzeichnet ist.

Die drehelastische Kupplung gemäß der Erfindung zeigt also in der vorstehend beschriebenen Ausführungsform einen als ideal zu bezeichnenden anschlagfreien und zerstörungsfreien absolut funktionssicheren Überlastungsschutz für die Kraftübertragung.

Alternativ kann jedoch auch das vorstehend beschriebene Durchrutschen der Kupplung bei Überlastung durch Anschlagmittel begrenzt werden, wobei solche Anschlagmittel entweder den radialen Federweg der Federglieder oder die Relativverdrehung der beiden Kupplungshälften gegeneinander durch Klauenanschlag begrenzen. Solche Anschlagmittel werden in den Fällen zweckmäßig sein, in denen ein Rechteckabbruch der Federkennlinie der Kupplung nicht schädlich und/oder hinnehmbar ist und zugunsten größerer Verdrehwinkelbereiche für den Normalbetrieb mit kleineren Reservebereichen des Verdrehwinkels gearbeitet werden soll oder muß. So werden also solche Anschlagsmittel vorzugsweise dann vorgesehen sein, wenn die Kupplung beispielsweise auf einen Verdrehwinkel von 170° für die bei Normalbetrieb zu erwartenden maximalen Drehmomente ausgelegt ist. Auch aus Sicherheitsgründen wird es häufig erforderlich sein, ein Durchrutschen der Kupplung durch Anschlagmittel auszuschließen, beispielsweise in Aufzugsanlagen.

Die Umsetzung einer Relativverdrehung zwischen der antriebsseitigen Kupplungshälfte und der abtriebseitigen Kupplungshälfte erfolgt z. B. bei koaxial zueinander angeordneten Kupplungshälften zunächst über die Exzenterscheibe. Eine derartige Exzenterscheibe, die drehfest mit der ersten Kupplungshälfte verbunden ist, kann sowohl einstückig hergestellt sein, als auch aus einer Gruppe axial aufeinanderfolgender Exzenterscheiben bestehen. Diese Möglichkeit der Ausbildung besteht sowohl bei einem einzigen Federglied, aber auch bei mehreren im gleichen Winkelabstand zueinander angeordneten Federgliedern, denen dann auf der ersten Kupplungshäfte entsprechende winkelversetzte Exzentrizitäten einer entsprechenden Anzahl von Exzenterscheiben zugeordnet sind. In der Regel wird hierbei jedem Federglied eine Exzenterscheibe als bewegungsumsetzendes Zwischenglied zugeordnet. Im Hinblick auf den Kraftfluß durch die Kupplung liegen diese Wirkstrecken jeweils parallel zueinander.

Die Federglieder sind vorzugsweise aus verstärktem oder unverstärktem Elastomer gefertigt. Sie können jedoch auch aus Federstahl hergestellt sein und beispielsweise die Form von Schraubenfedern, Elliptikfedern oder speziell angepaßt geformten Blattfedern haben. Bei Verwendung eines Elastomers zur Herstellung der Federglieder kann die Druckbelastbarkeit des Elastomers in an sich bekannter Weise durch das Einvulkanisieren von Zwischenblechen zur Querdehnungsbehinderung erhöht werden. Im Falle der Ausbildung der Kupplung mit koaxial und konzentrisch angeordneten Kupplungshäften sind die Federglieder vorzugsweise in Form von zumindest im wesentlichen zylindrisch gekrümmten Schalenelementen ausgebildet. Jedes dieser gummielastischen Schalenelemente ist mit einer seiner zylindrisch gekrümmten Mantelflächen drehfest mit einer, vorzugsweise der radial äußeren Kupplungshälfte verbunden, und zwar beispielsweise verschraubt, verklebt und/oder auf diese aufvulkanisiert, vorzugsweise formschlüssig aufgesteckt, insbesondere durch Einschieben in axialer Richtung aufgesteckt oder aufgeklipst. An seiner gegenüberliegenden, also vorzugsweise radial inneren Mantelfläche, weist das Federglied ein Stütz- oder Lagerelement auf, an dem das Koppelglied, z. B. eine Gleiteinrichtung oder ein Pleuel, angelenkt ist. Der ausnutzbare Verdrehwinkel der beiden Kupplungshälften gegeneinander, d. h. deren möglicher Verdrehungswinkel bei Einleitung eines entsprechenden Drehmomentes, läßt sich bei anschlagfreier Konstruktion auch bis zu einem Bereich von 360° oder darüber auslegen, wobei bei mehreren Federgliedern deren axiale Versetzung zu berücksichtigen ist.

Die Federglieder, seien dies nun Stahlfedern der verschiedensten Bauweise oder Elastomerkörper, können sowohl mit negativer als auch mit positiver Vorspannung als auch ohne Vorspannung in der unbeaufschlagten Kupplung angeordnet sein. Unter einer negativen Vorspannung wird dabei beispielsweise eine Zugvorspannung des Federelementes verstanden, wenn dieses auf Druck beansprucht wird. Andererseits wäre eine Zugvorspannung des Federgliedes eine positive Vorspannung, wenn das Federglied bei Normalbetrieb der Kupplung auf Zug beansprucht werden soll. Die Art der Vorspannung oder gegebenenfalls die Verwendung nicht vorgespannter Kupplungsfederglieder hängt jeweils von den Erfordernissen des einzelnen Anwendungsfalles ab, genauer gesagt, von der Federkennlinie, die von der Kupplung für den einzelnen Fall erwartet wird. Wenn insbesondere beispielsweise eine Kupplung, die in großer Serie gefertigt wird, für verschiedene Anwendungszwecke mit verschiedener Abstimmung eingesetzt werden soll, so kann dies in besonders vorteilhafter Weise dadurch erreicht werden, daß die Federglieder, beispielsweise Elastomerkörper, in einem außen umgreifenden Käfig, der Teil der Kupplungshälfte ist oder mit dieser in formschlüssiger Verbindung steht, eingeschossen werden, wobei der Durchmesser dieses Käfigs durch geeignete Spannmittel oder Rastmittel in den gewünschten Bereichen veränderbar ist. Ist beispielsweise eine bestimmte Kupplung zur Übertragung eines Drehmoments von 100 Nm bei einem Verdrehwinkel von 90° ausgelegt und soll dieselbe Kupplung bei dem gleichen Federwinkel von 90° ein Drehmoment von beispielsweise 130 Nm übertragen, so bedarf es bei einer solcherart als Käfigkupplung ausgelegten Kupplung lediglich des Engerspannens des die Federglieder umspannenden und vorspannenden Käfigs, um diese Bedingungen einzustellen.

Bei der Verwendung von Gummifedern oder Gummi-Metall-Federn als Federglieder läßt sich die Drehmoment-Verdrehwinkel-Kennlinie, also die Federkennlinie der drehelastischen Kupplung, dann in besonders einfacher Weise sowohl für experimentelle Zwecke als auch für die Serienfertigung verändern und einstellen, wenn die Federglieder bei konzentrisch in einer Radialebene angeordneten Kupplungshälften als in axialer Richtung einschiebbare und in Drehrichtung formschlüssig fixierte auswechselbare Elemente ausgebildet sind, speziell als Gummi-Metall-Feder mit zumindest einer radial äußeren und einer radial inneren, das Federglied fixierenden Metallplatte. Durch verschiedene Kombinationen solcher Einzelelemente können die Kennlinien beliebig ausgestaltet und angepaßt und insbesondere auch in beiden einander entgegengesetzten Drehrichtungen der Relativverdrehung beider Kupplungshälften gegeneinander unterschiedlich ausgebildet werden. Bei der Verwendung der Kupplung im Kraftfahrzeugbau können also beispielsweise unterschiedliche Federkennlinien der Kupplung für Vorwärtsfahrt und Rückwärtsfahrt durch Einstecken entsprechender Gummifedern zwischen die beiden Kupplungshälften vorgesehen werden.

Im Axialschnitt können die Gummi-Metall-Federn prinzipiell beliebig nach den jeweiligen Erkenntnissen dieses Bereiches der konstruktiven Technik gestaltet werden. So kann der Elastomerquerschnitt der Gummiferdern in axialer Richtung beispielsweise im wesentlichen rechteckig, V-förmig mit radial einwärts oder auswärts weisender Spitze oder mit einem oder mehreren inneren Hohlräumen oder Dämpfungsräumen ausgebildet sein.

Bei Belastung der Kupplung, also bei Einleiten einer Arbeit an einer der Kupplungshälften, wird das Elastomer der Gummifeder, wenn eine solche als Federglied der Kupplung verwendet wird, bei Normalbetrieb vorzugsweise unter Druck belastet. Dabei baucht das Elastomer in axialer Richtung wulstringförmig aus, was unter Umständen für bestimmte Anwendungsfälle, beispielsweise im Schwerkraftfahrzeugbau, zu einer zu « weichen » Federkennlinie der Kupplung führen kann, also zu einer zu schwachen Progression der übertragenen Drehmomente als Funktion des Verdrehwinkels. Diese Situation kann im Bedarfsfall dadurch abgestellt werden, d. h. die Federkennlinie kann dadurch versteift, also stärker progressiv gestaltet werden, daß die Kupplung, zumindest die axial seitlichen in der Radialebene liegenden unbelasteten Gummiringflächen der Gummifedern bzw. Gummi-Metall-Federn durch Bleche nach Art einer Kapsel oder eines Käfigs zu beiden Seiten eingeschlossen werden. Diese Einkapselung kann dabei so erfolgen, daß im entspannten Zustand der Kupplung, also ohne eine in die Kupplung eingeleitete Arbeit, die seitlichen Ringflächen der Gummifedern einigen Abstand zum seitlichen Käfigblech wahren oder, alternativ, direkt an der Innenwand des Käfigblechs anliegen. Im ersten Fall wird bei Beaufschlagung der Kupplung zunächst eine weiche und dann, nach Anliegen des sich auswulstenden Gummis an dem Käfigblech, eine zunehmend progressive Kennlinie erzielt, während im zweiten Fall eine von vornherein steife, also stark progressive Federkennlinie der Kupplung durch eine Verringerung der frei verformbaren unbelasteten Oberfläche der Gummifeder erreicht wird. Insbesondere bei Verwendung lösbar und austauschbar befestigter Gummifederglieder mit unterschiedlichen Shore-Härten und unterschiedlichen geometrischen Formen und insbesondere Abständen zu den Innenwänden der Kapselbleche oder Käfigbleche kann dadurch eine praktisch unbegrenzte Vielfalt und Feinabstimmung der jeweils gewünschten Federkennlinien der Kupplung eingestellt werden. Auch kann bei einer solchen allseitig begrenzt abgeschlossenen Einkapselung des Federelastomers ein so stark progressiver Verlauf der Federkennlinie eingestellt und erzielt werden, daß dieser gleichsam als Anschlag ausgebildet werden kann und dadurch ein höherer Verdrehwinkel der Kupplung ausgenützt werden kann.

Für die Ausgestaltung des Koppelgliedes stehen mehrere Alternativen zur Verfügung. Dies ist einmal eine mit der Exzenterscheibe bewegungsumsetzend verbundene Gleiteinrichtung, insbesondere ein Gleitstein, die bzw. der in zwei Bewegungsrichtungen ausgelenkt werden kann. Im Hinblick auf eine scherkraftfreie Beaufschlagung des Federgliedes ist hierbei insbesondere die quer bzw. senkrecht zur Nullachsenlage bzw. der Achse der Wirkflächenmitte des Federgliedes mögliche Gleitrichtung wichtig. Als weitere Alternative, die bevorzugt eingesetzt wird, ist das Koppelglied ein Pleuel, der beispielsweise mit seinem größeren Auge in einer Roll- oder Gleitlagerverbindung mit der Exzenterscheibe an der ersten Kupplungshälfte steht. Mit seinem zweiten, normalerweise kleineren Auge, steht der Pleuel mit der radial inneren Lagerschale des entsprechenden Federgliedes in einer festen, aber schwenkbaren Verbindung, beispielsweise durch Zapfen- oder Bolzenlagerung.

Die Auslegung der drehelastischen Kupplung mit insbesondere zwei einander diametral gegenüberliegenden Federgliedern und zugeordneten Exzenterscheiben erfolgt vorzugsweise so, daß in der Ruhelage bei nicht beanspruchter Kupplung eine Nullachsenlage vorhanden ist, worunter eine durch die Totpunkte der Exzenterscheibe sowie durch die Wirkflächenmitte der Federglieder gehende Achse verstanden wird, zu welcher Achse die Kupplungsteile vorzugsweise symmetrisch ausgebildet sind.

Wenn das Koppelglied als Gleiteinrichtung bzw. Gleitstein ausgelegt ist, wird hierfür vorzugsweise die Form einer rechteckigen Platte gewählt. Diese Platte ist nach radial innen in Richtung zur Drehachse der ersten Kupplungshälfte, z. B. über einen Wälzlagerring, direkt mit dem Exzenter verbunden. Um zu vermeiden, daß von der Wirkflächenmitte des Federgliedes abweichende Kraftkomponenten, die für das Federglied eine Scherbeanspruchung darstellen würden, übertragen werden, ist der Gleitstein in einer Gleitführung gelagert. Diese Gleitführung, die käfigartig ausgelegt sein kann, ist andererseits starr mit dem Federglied, z. B. durch Anvulkanisieren, Vernieten oder in anderer Weise verbunden. Bezogen auf die Anlagefläche mit dem Gleitstein ist hier von besonderer Bedeutung, daß diese bestmögliche Gleiteigenschaften aufweisen soll, um die Reibungsverluste an dieser Fläche möglichst gering zu halten.

Die Gleitfläche zwischen der käfigartigen Gleitführung und dem von der Exzenterscheibe bewegten Gleitstein ist dabei vorzugsweise gradlinig bzw. eben ausgebildet. Vorzugsweise bestehen die beiden Gleitflächen aus einem reibungsarmen Material, wobei zusätzlich noch eine die Gleiteigenschaften begünstigende Filmschicht aufgebracht sein kann.

Bei der Auslegung des Koppelgliedes als Pleuel, der punktuell z. B. über einen Bolzen an einer radial inneren Lagerschale des Federgliedes angelenkt ist, werden die zur Scherkraftbeanspruchung des Federgliedes führenden Kraftkomponenten nahezu vollständig durch die Verschwenkbarkeit des Pleuels an der inneren Lagerschale des Federgliedes eliminiert. Geringfügige möglicherweise noch vorhandene Scherbeanspruchungen können hierbei gegenüber der radial in der Wirkflächenmitte des Federgliedes einwirkenden Auslenkkräfte vernachlässigt werden. Im Gegensatz zur Verwendung eines Gleitsteins als Koppelglied ist bei Verwendung eines Pleuels das radial innere Lager des Federgliedes vorzugsweise als Zylindermantel-.Segment ausgelegt, da in dieser Form die mittige Kraftbeaufschlagung am günstigsten ist. Zur Erreichung einer einfachen Konstruktion eignet sich bei der Ausbildung mit Pleuel eine leicht achsversetzte Anordnung der Pleuel. Hierbei können die beiden Exzenterscheiben beispielsweise einstückig hergestellt werden, wobei die einzelnen Exzenterscheiben achsversetzt etwa um ihre Breite und winkelversetzt etwa um 180°, vorgesehen werden.

Abhängig von der Nullage der Exzenterscheiben, worunter die Anordnung der größten bzw. kleinsten Exzentrizität der Exzenterscheibe gegenüber dem entsprechenden Federglied verstanden wird, kann das Federglied von seiner Ruhelage aus gesehen prinzipiell entweder auf Zug oder auf Druck beansprucht werden. Aus Gründen der Materialschonung wird das Federglied jedoch vorzugsweise einer Druckbeanspruchung ausgesetzt.

Ausgehend von einem Federglied, das keine Vorspannung in irgendeiner Richtung aufweist, und der Anordnung der größten Exzentrizität der Exzenterscheibe in der Nullage auf der dem Federglied abgewandten Seite, wird bei der Rotationsbewegung des Exzenters dieses Federglied auf Druck beansprucht. Sofern sich die Exzentrizität der Exzenterscheibe in der Nullage in der geometrisch nächsten Stellung zur Wirkflächenmitte des Federgliedes befindet, wird bei einer Drehung der Exzenterscheibe das Federglied auf Zug beansprucht.

Die drehelastische Kupplung gemäß der Erfindung zeichnet sich durch eine ungewöhnlich große Anpaßbarkeit aus und zwar sowohl hinsichtlich der einzustellenden Verdrehwinkel als auch der zu übertragenden Drehmomente als auch der Größe der Bauweise. Aufgrund dieser Eigenschaften kann die drehelastische Kupplung gemäß der Erfindung praktisch in jedem beliebigen Bereich der Technik überall dort eingesetzt werden, wo Drehmomente drehelastisch zu übertragen sind. Die Kupplung kann vor allem als Federglied in Antriebssystemen eingesetzt werden, wobei sie gleichzeitig auch als wirksamer Überlastungsschutz dienen kann. Die zur Zeit wichtigste Bedeutung hat die drehelastische Kupplung gemäß der Erfindung jedoch im Kraftfahrzeugbau erlangt, wo sie vor allem zur Abfederung der Drehmomentstöße bei niedrigen und extrem niedrigen Motordrehzahlen eingesetzt werden kann. Die drehelastische Kupplung gemäß der Erfindung kann dabei mit besonderem Vorteil in den heute gebräuchlichen Trennkupplungen des Kraftfahrzeugbaus eingesetzt werden und zwar zwischen der Mitnehmerscheibe oder Kupplungsscheibe der Trennkupplung und der Ausgangswelle der Trennkupplung bzw. der Eingangswelle des Schaltgetriebes.

Aufgrund der großen Verdrehwinkel, der extremen Robustheit und Standzeit und der praktisch beliebig einstellbaren Federkenndaten wird die drehelastische Kupplung gemäß der Erfindung im Kraftfahrzeugbau vorzugsweise weithin als Tilger, insbesondere Niederfrequenztilger, eingesetzt.

Die Erfindung ist nachstehend anhand mehrerer schematischer Ausführungsbeispiele in Verbindung mit den Zeichnungen noch näher erläutert. Es zeigen:

Figur 1 einen axialen Schnitt durch eine drehelastische Kupplung, die im Prinzip zwei koaxiale Kupplungshälften aufweist und deren Koppelglied als Gleiteinrichtung ausgebildet ist;

Figur 2 eine axiale Draufsicht auf die Kupplung nach Fig. 1 von rechts mit den zwei Federgliedern unter Weglassung der axialen Führungsplatte für die Zwischenglieder;

Figur 3 einen axialen Schnitt durch eine andere Ausführungsform der Kupplung mit Pleuel als Koppelgliedern, wobei diese Ausführungsform zur Druckbeanspruchung der Federglieder ausgelegt ist;

Figur 4 eine axiale Draufsicht auf das Ausführungsbeispiel nach Fig. 3 längs der Schnittlinie IV-IV;

Figur 5 einen axialen Schnitt durch eine abgewandelte Ausführungsform der Kupplung nach Fig. 3, bei der die Anordnung der Pleuel für eine Zugbeanspruchung der Federglieder ausgelegt ist; und

Figur 6 eine axiale Draufsicht auf das Ausführungsbeispiel nach Fig. 5 längs der Schnittlinie VI.

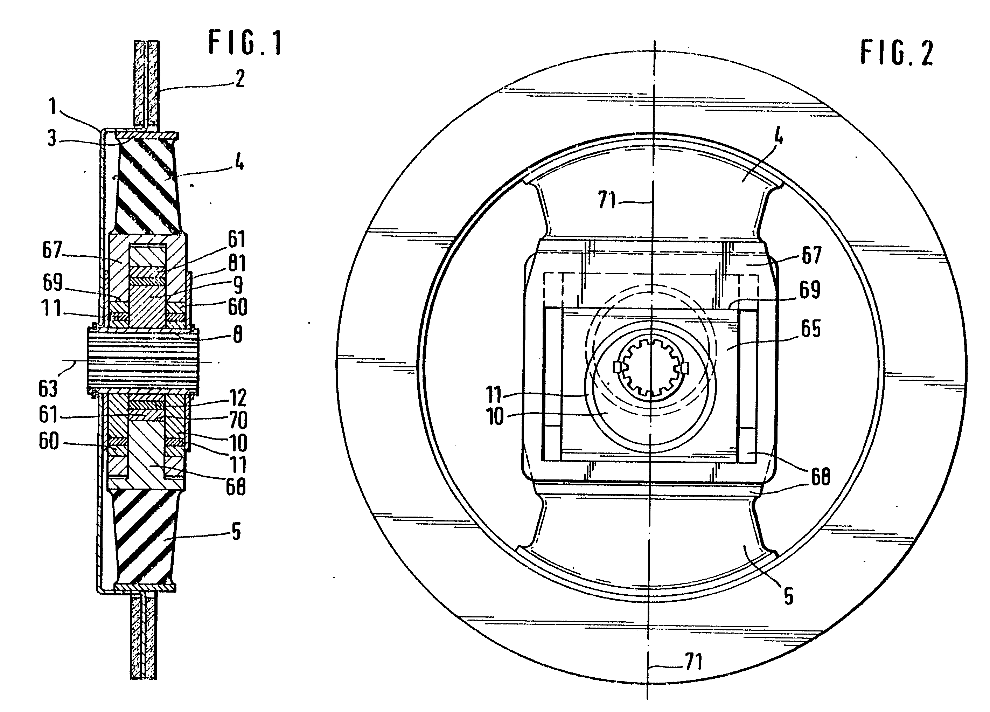

Die Figuren zeigen Ausführungsbeispiele der drehelastischen Kupplung als Bestandteil einer Trennkupplung für den Kraftfahrzeugbau. In den Figuren 1 und 2 ist die Mitnehmerscheibe 1 mit den Kupplungsbelägen 2 drehfest an einem zylindrischen Stahlring befestigt, der die eine, und zwar die zweite, Kupplungshälfte 3 der drehelastischen Kupplung bildet. Diametral einander gegenüberliegend sind drehfest an der Innenseite der ringförmigen Kupplungshälfte 3 zwei Federgleicher 4, 5 in Form von Elastomerkörpern anvulkanisiert, die als elastische federnde Zwischenglieder der drehelastischen Kupplung wirken. Die Elastomerkörper haben zumindest im wesentlichen die Form zylindrischer Teilschalen. In der Ausbildung der Kupplung mit der Gleiteinrichtung nach Fig. 1 und 2 ist diese zylindrische Teilschalenform auf die Befestigung mit der zweiten Kupplungshälfte 3 begrenzt. Der radial innenliegende Teil der Elastomerkörper ist in einer geradlinig verlaufenden Fläche mit dem dem entsprechenden Elastomerkörper zugewandten Teil eines Gleitkäfigs 67 verbunden.

Die Getriebewellenhülse der Trennkupplung dient als erste Kupplungshälfte 8 der drehelastischen Kupplung. Diese erste Kupplungshälfte 8 ist drehfest mit zwei Exzenterscheiben 9, 10 verbunden, die im Beispiel nach Fig. 1 aus Gründen des Massenausgleichs gabelverzahnt ausgebildet sind. Die Exzenterscheiben 9, 10 sind im Beispiel nach Figuren 1 und 2 um 180° gegeneinander versetzt angeordnet. Die gabelförmige, suzosagen axial außenliegende Exzenterscheibe 10 ist dabei mit seiner größten Exzentrizität nach unter liegend dargestellt. Bei einer Drehung der Exzenterscheibe 10 erhält der über das ringförmige Wälzlager 11 mit ihm in Verbindung stehende Gleitstein 65 sowohl eine radiale auf das obere federlgied 4 wirkende Bewegungskomponente als auch eine dazu quer verlaufende Bewegungskomponente. Der Gleitstein 65, der das Koppelglied 60 bildet, hat im Beispiel nach Fig. 1 und 2 die Form einer rechteckigen Platte. Der Gleitstein 65 liegt dabei an der oberen Gleitfläche 69, die im wesentlichen senkrecht zur Nullagenachse bzw. Achse der Wirkflächenmitte 71 verläuft, an einem Gleitkäfig 67 an. Während der Gleitkäfig 67 mit dem Gleitstein 65 in Richtung der Nullagenachse über die obere Gleitfläche 69 gegebenenfalls auch über eine untere Gleitfläche direkt führt, ist in der Bewegungsrichtung senkrecht zur Nullagenachse, nach Fig. 2 sozusagen in horizontaler Richtung, keine Begrenzung der Bewegung des Gleitsteines 65 durch den Gleitkäfig 67 vorhanden. Die Bewegungsbegrenzung in dieser Richtung erfolgt dabei allein durch die größte Auslenkung der Exzenterscheibe 10.

Zur besseren Führung des Gleitsteines 65 ist der Gleitkäfig 67 wie in Fig. 2 gezeigt, in Art eines Viereckrahmens gestaltet. Zur besseren Anbindung an das Federglied 4 und entsprechenden Drehmomentübertragung ist jedoch der dem Federglied 4 zugewandte Bereich des Rahmens des Gleitkäfigs 67 im Vergleich zum gegenüberliegenden Ende stärker ausgebildet, Während der gabelförmige Gleitkäfig 67 und die entsprechende Exzenterscheibe sowie das zugehörige Koppelglied und das Gleitlager 11 gegen eine axiale Verschiebung nach außen durch beidseitig angebrachte axiale Führungsplatten 81 festgelegt werden, übernimmt der gabelförmige Gleitkäfig 67 und die entsprechenden Zwischenglieder diese Aufgabe für die innere Exzenterscheibe 9 sowie die diesen zugeordneten Gleitlager 12, Gleitstein 66 und Gleitkäfig 68.

Sofern die Exzenterscheibe 10, die mit der ersten Kupplungshälfte 8 als Eingangswelle 15 fest verbunden ist, in Drehung versetzt wird, überträgt sie diese Drehung auf den Gleitstein 65. Durch die Berührung des Gleitsteines 65 und des Gleitkäfigs 67 an der oberen Gleitfläche 69, die sehr gute Gleiteigenschaften aufweist, also einen sehr niedrigen Reibungskoeffizienten hat, wird die Auslenkung der Exzenterscheibe 10 in horizontaler Richtung nach Fig. 2 in eine entsprechende Gleitbewegung des Gleitsteines 65 und des Gleitkäfigs 67 an der oberen Gleitfläche 69, die sehr gute Gleiteigenschaften aufweist, also einen sehr niedrigen Reibungskoeffizienten hat, wird die Auslenkung der Exzenterscheibe 10 in horizontaler Richtung nach Fig. 2 in eine entsprechende Gleitbewegung des Gleitsteines 65 im Gleitkäfig 67 umgesetzt. Die für die Federkennlinie des Federgliedes 4 wesentliche Auslenkung erfolgt jedoch in radialer Richtung auf das Federglied 4 in der Achse der Wirkflächenmitte 71, wobei der Gleitstein 65 zusammen mit dem Gleitkäfig 67 in der Darstellung nach Fig. 2 angehoben werden und dadurch eine Druckbeanspruchung des Federgliedes 4 auslösen. Im Beispiel nach Fig. 2 würde diese Druckbeanspruchung bis zum oberen Totpunkt der Exzenterscheibe 10 vor sich gehen. Durch die relativ lange gerade Führungslinie an der Gleitfläche 69 zwischen Gleitstein 65 und Gleitkäfig 67 wird sichergestellt, daß eine möglichst gleichmäßige parallel zur Achse der Wirkflächenmitte 71 verlaufende Kraftbeaufschlagung auf das Federglied 4 ausgeübt wird, so daß Scherkräfte im Federglied nahezu vollständig vermieden werden und dadurch die Lebensdauer der Gesamtkupplung erheblich verbessert werden kann. Im Beispiel nach Fig. 1 und 2 unterliegt daher das entsprechende Federglied 4 bzw. 5 bei einer Drehmomentbeaufschlagung von seiten der ersten Kupplungshälfte 8 her fast ausschließlich einer radial gerichteten Verformungsdruckspannung und keinen Scherbelastungen. Hierzu trägt auch bei, daß die einzelnen Federglieder 4 bzw. 5 in der Wirkflächenmitte etwas stärker ausgebildet sind als an den seitlichen Rändern der im Prinzip ein Segment eines Zylindermantels darstellenden Elastomerglieder.

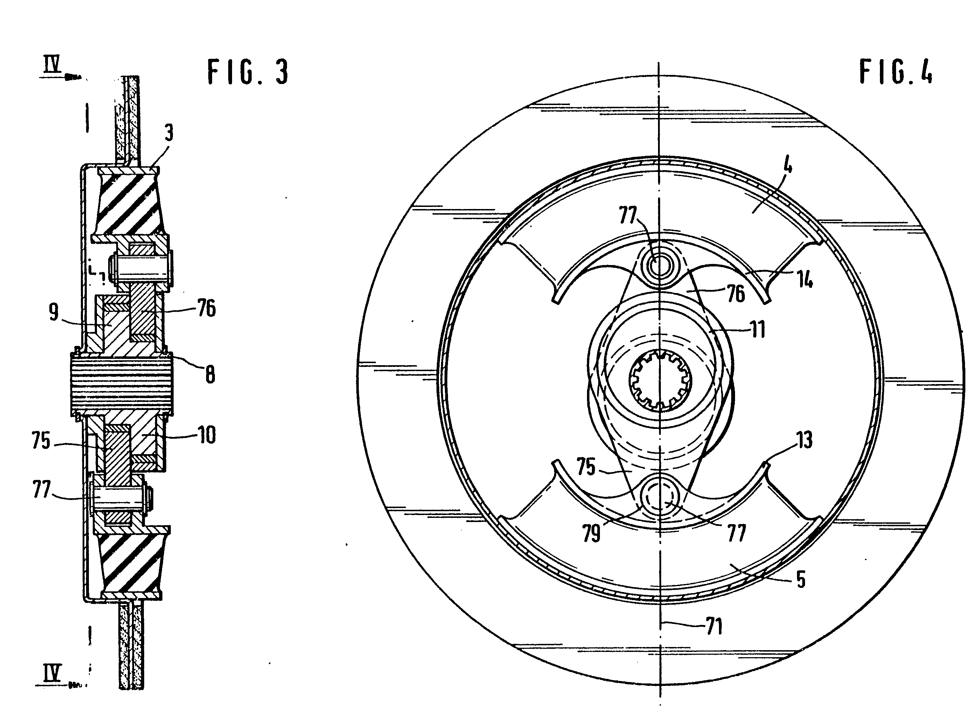

In Fig. 3 und 4 ist ein Ausführungsbeispiel der drehelastischen Kupplung gezeigt, in der das Koppelglied jeweils in Form eines Pleuels 75 bzw. 76 vorgesehen ist. Entsprechend der Fig. 4 ist dabei der eine Pleuel 75 über eine entsprechendes ringförmiges Gleitlager 11 an der einen Exzenterscheibe 9 geführt. Das andere Pleuelauge 79, in Fig. 4 das untere, ist über einen Bolzen 77 mit einer Lagerschale 13 verbunden, die eine teilkreisförmige Gestalt, insbesondere etwa ein 90°-Segment, bildet. Diese Lagerschale 14 ist mit dem entsprechenden Teilkreis eines Zylindermantels des als Federglied 5 eingesetzten Elastomers verbunden, z. B. daran anvulkanisiert.

Da sich die größte Exzentrizität der Exzenterscheibe 9 sozusagen in Ruhestellung nach Fig. 4 in der vom Federglied 5 entferntesten Lage befindet, führt jede davon abweichende Bewegung um die Rotationsachse 63 zunächst zu einer Druckbeanspruchung des dazugehörenden Federgliedes 5.

Im Gegensatz zu Ausführungsformen, in denen nur eine Exzenterscheibe zwischen der inneren Kupplungshälfte 8 und der äußeren Kupplungshälfte 3 vorhanden ist, findet die Drehmomentübertragung und Kraftübertragung auf die Federglieder 4 bzw. 5 im Ausführungsbeispiel nach Fig. 3 und 4 über die zwischengeschalteten Koppelglieder, die Pleuel 75 bzw. 76, statt.

Im Ausführungsbeispiel nach Fig. 4 ist das größere Pleuelauge an der Exzenterscheibe 9 und dem entsprechenden Gleitlager 11 vorgesehen, während das kleinere Pleuelauge 79 den Bolzen 77 des unteren Federgliedes aufnimmt. Die beiden in diesem Ausführungsbeispiel vorgesehenen Exzenterscheiben 9 und 10 sind dabei, wie in Fig. 3 gezeigt, als eine Einheit auf der Drehachse der ersten Kupplungshälfte 8 drehfest angeordnet. Aufgrund der geringfügigen axialen Versetzung der beiden Exzenterscheiben 9 und 10 greift auch das entsprechende Koppelglied leicht axial versetzt an den Lagerschalen 13 der Federglieder 4 bzw. 5 an. Im Abwandlung zu der in Fig. 3 gezeigten Schwenkanlenkung des Pleuels 75 über den entsprechenden Bolzen 77 an der Lagerschale 13, kann die zu beiden Seiten des Pleuels erfolgende Bolzenlagerung in der Lagerschale des Federgliedes so erfolgen, daß die gesamte axiale Breite des Federgliedes erfaßt wird.

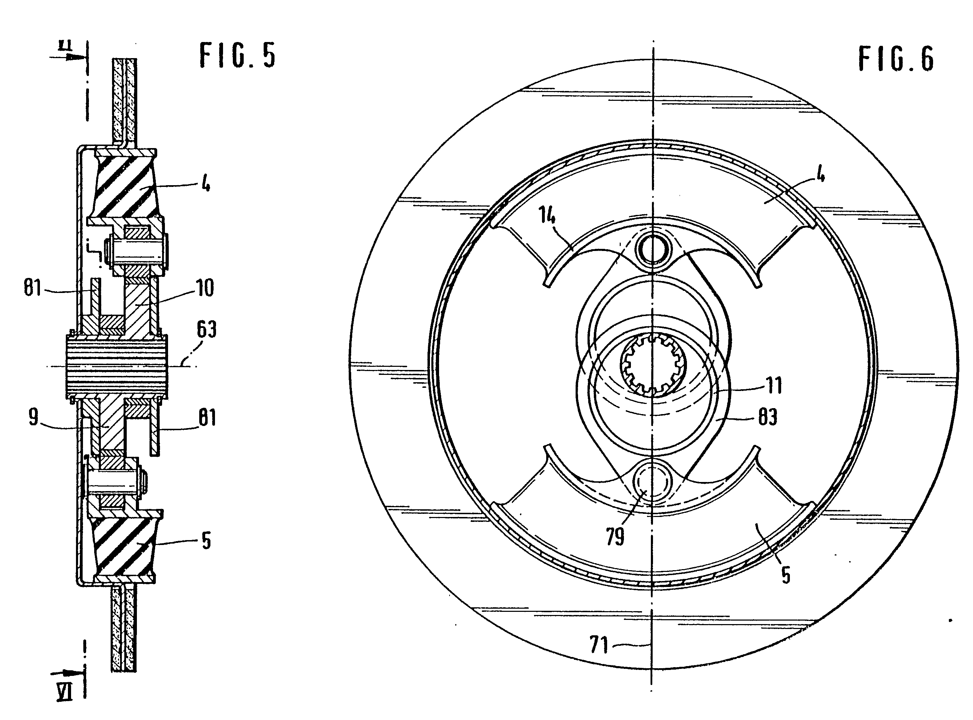

Während in den Figuren 3 und 4 eine elastische Kupplung schematisch dargestellt ist, die aus der Ruhelage heraus bei einer Drehung der Exzenterscheiben 9 bzw. 10 eine Druckbeanspruchung der entsprechenden Federglieder 5 bzw. 4 hervorruft, betreffen die Fig. 5 und 6 ein Beispiel der Zugbeanspruchung.

Der wesentliche Unterschied zum Beispiel der Fig. 3 und 4 besteht darin, daß der als Koppelglied dienende Pleuel sich in Ruhestellung in der untersten Totlage der Exzenterscheibe befindet, der gemäß Fig. 6 mit seiner größten Exzentrizität in Nahstellung zum Federglied, sozusagen diesem gegenüberliegend, vorgesehen ist. Unter der Voraussetzung, daß das Federglied 5 in dieser Lage ohne jegliche Vorspannung des Elastomers ist, bewirkt zunächst jede aus der in Fig. 6 gezeigten Lage abweichende Drehung der Exzenterscheibe 9 eine Zugbeanspruchung des Federgliedes 5. Gleiches gilt auch für das zweite diametral gegenüberliegend angeordnete parallel wirkende Federglied 4. Ähnlich wie im Beispiel nach Fig. 3 sind auch beim Ausführungsbeispiel nach Fig. 5 zur Verhinderung einer axialen Verschiebung der Gleitlager 11 bzw. 12 axiale Führungsplatten 81, beispielsweise mittels eines Sprengringes, auf der Exzentereinheit angebracht, wobei diese Führungsplatten 81 eine größere radiale Erstreckung aufweisen, als die entsprechenden Gleitlager.

## Patentansprüche

1. Drehelastische Kupplung mit mindestens einem bewegungsumsetzenden Zwischenglied (9, 10), das eine Rotation in eine Translation umsetzt und das rotatorisch kraftschlüssig mit einer ersten der beiden Kupplungshälften (8) verbunden ist und zumindest im wesentlichen translatorisch kraftschlüssig mit mindestens einem Federglied (4, 5) verbunden ist, das seinerseits drehfest mit der zweiten der beiden Kupplungshälften (3) verbunden ist, dadurch gekennzeichnet, daß das bewegungsumsetzende Zwischenglied eine Exzenterscheibe (9, 10) ist, an der ein mit dem Federglied (4, 5) kraftschlüssig verbundenes Koppelglied (60, 61 ; 75, 76) drehbar angelenkt ist.

2. Kupplung nach Anspruch 1, dadurch gekennzeichnet, daß das Koppelglied (75, 76) drehbar am Federglied (4, 5) angelenkt ist.

3. Kupplung nach einem der Ansprüche 1 oder 2, dadurch gekennzeichnet, daß das Koppelglied ein Pleuel ist.

4. Kupplung nach einem der Ansprüche 1 bis 3, dadurch gekennzeichnet, daß das Koppelglied ein Gleitstein (65, 66) ist.

5. Kupplung nach Anspruch 4, dadurch gekennzeichnet, daß der Gleitstein (65, 66) in einem am Federglied (4, 5) befestigten Gleitkäfig (67, 68) geführt ist, daß der Gleitstein (65, 66) und der Gleitkäfig (67, 68) mindestens zum zugeordneten Federglied (4, 5) hin eine gemeinsame Gleit- und Wirkfläche (69, 70) aufweisen, die insbesondere quer zur radialen scherkraftfreien Wirkverbindung angeordnet ist.

6. Kupplung nach einem der Ansprüche 1 bis 5, dadurch gekennzeichnet, daß die Exzenterscheibe (9, 10) und das Koppelglied so miteinander verbunden sind, daß das Federglied (4, 5) bei einer Relativverdrehung der beiden Kupplungshälften (3, 8) gegeneinander mit einer Kompressionskraft beaufschlagt wird.

7. Verwendung der Kupplung nach einem der Ansprüche 1 bis 6 im Kraftfahrzeugbau, und zwar im Antriebssystem, insbesondere zwischen der Mitnehmerscheibe und der Abtriebswelle einer Trennkupplung, und als Tilger, insbesondere Niederfrequenztilger.

## Claims

1. A torsionally elastic coupling with a least one movement-converting intermediate member (9, 10) which converts rotation into translation and which is connected in terms of rotation in a non-positive manner to a first of the two coupling halves (8) and is connected at least essentially in terms of translation in a non-positive manner to at least one resilient member (4, 5) which is in turn connected solidly in terms of rotation to the second of the two coupling halves (3), characterized in that the movement converting intermediate member is an eccenter disk (9, 10), to which a coupling member (60, 61 ; 75, 76) is rotatably articulated, which is connected nonpositively to the resilient member (4, 5).

2. A coupling as claimed in claim 1 wherein the coupling member (75, 76) is articulated rotatably to the resilient member (4, 5).

3. A coupling as claimed in any of claims 1 or 2, wherein the coupling member is a connecting rod.

4. A coupling as claimed in any of claims 1 to 3, wherein the coupling member is a sliding block (65, 66).

5. A coupling as claimed in claim 4, wherein the sliding block (65, 66) is guided in a slide cage (67, 68) fastened to the resilient member (4, 5), and wherein the sliding block (65, 66) and the slide cage (67, 68) have, at least towards the associated resilient member (4, 5), a common sliding and operative surface (69, 70) which is arranged especially transversely to the radially operative connection which thus is free of shearing force.

6. A coupling as claimed in any of claims 1 to 5 wherein the eccenter disk (9, 10) and the coupling member are connected to one another in such a way that, when the two coupling halves (3, 8) are rotated relative to one another, the resilient member (4, 5) is subjected to a compressive force.

7. The use of a coupling as claimed in any of claims 1 to 6 in automobile construction, specifically in the drive system, especially between the driving plate and the output shaft of a clutch, and as a suppressor, especially a low-frequency suppressor.

## Revendications

1. Accouplement élastique à rotation comportant au moins un organe intermédiaire (9, 10) de transformation des mouvements qui transforme une rotation en une translation et qui est relié par serrage pour la rotation, à la première des deux moitiés d'accouplement (8) et est relié par serrage, au moins essentiellement pour la translation à au moins un organe élastique (1, 5) qui, à son tour, est relié, sans rotation possible par rapport à elle, à la deuxième des deux moitiés d'accouplement (3), caractérisé en ce que l'organe intermédiaire de transformation des mouvements est un disque d'excentrique (9, 10) sur lequel s'articule, de manière à pouvoir tourner, un organe d'accouplement (60, 61, 75, 76) relié par serrage à l'organe élastique (4, 5).

2. Accouplement selon la revendication 1, caractérisé en ce que l'organe d'accouplement (75, 76) s'articule de manière à pouvoir tourner, sur l'organe élastique (4, 5).

3. Accouplement selon l'une des revendications 1 ou 2, caractérisé en ce que l'organe d'accouplement est une bielle.

4. Accouplement selon l'une des revendications 1 à 3, caractérisé en ce que l'organe d'accouplement est une pièce de glissement (65, 66).

5. Accouplement selon la revendication 4, caractérisé en ce que la pièce de glissement (65, 66) est guidée dans une cage de glissement (67, 68) fixée sur l'organe élastique (4, 5), en ce que la pièce de glissement (65, 66) et la cage de glissement (67, 68) comportent au moins une surface de glissement et d'action commune (69, 70) tournée vers l'organe élastique correspondant et orientée en particulier transversalement par rapport à la zone de liaison radiale dans laquelle ne s'exercent pas d'efforts de cisaillement.

6. Accouplement selon l'une des revendications 1 à 5, caractérisé en ce que le disque d'excentrique (9, 10) et l'organe élastique sont reliés l'un à l'autre de telle manière que, lors d'un mouvement de rotation relatif des deux moitiés d'accouplement (3, 8), l'organe élastique (4, 5) est soumis à un effort de compression.

7. Utilisation de l'accouplement selon l'une des revendications 1 à 6 en construction automobile, dans les systèmes d'entraînement, notamment entre le disque d'entraînement et l'arbre de prise du mouvement d'un accouplement à déconnexion, et comme amortisseur, notamment comme amortisseur à basse fréquence.

FIG.2

FIG.1

FIG. 3

FIG. 4

IV

3

9

76

8

75

10

77

77

14

76

11

4

13

75

77

79

5

71

0 110 065

2

FIG.5

FIG.6

4

81

10

63

9

81

5

14

4

11

83

79

71

5

0 110 065